# EUROPÄISCHE PATENTSCHRIFT

(11) **EP 4 047 256 B1**
(45) Veröffentlichungstag und Bekanntmachung des Hinweises auf die Patenterteilung: **06.11.2024**
(21) Anmeldenummer: 21158499.0
(22) Anmeldetag: 22.02.2021
(51) Int. Cl.: F16P 3/14

(54) **ÜBERWACHUNGSEINRICHTUNG UND EIN VERFAHREN ZUR ABSICHERUNG EINES GEFAHRENBEREICHS MITTELS EINER ÜBERWACHUNGSEINRICHTUNG**
MONITORING DEVICE AND METHOD FOR PROTECTING A HAZARDOUS AREA BY MEANS OF A MONITORING DEVICE
DISPOSITIF DE SURVEILLANCE ET PROCÉDÉ DE SÉCURISATION D'UNE ZONE DANGEREUSE AU MOYEN D'UN DISPOSITIF DE SURVEILLANCE

(43) Veröffentlichungstag der Anmeldung: 24.08.2022
(73) Patentinhaber: Leuze electronic GmbH + Co. KG, 73277 Owen/Teck (DE)
(72) Erfinder: Rauscher, Thorsten, 81379 München (DE); Tull, Andreas, 82229 Seefeld (DE); Haberer, Hermann, 81379 München (DE); Pychal, Martin, 85221 Dachau (DE); Jüttner, Andreas, 81543 München (DE); Feller, Bernhard, 86316 Friedberg (DE)
(74) Vertreter: Ruckh, Rainer Gerhard

(56) Entgegenhaltungen:
- EP-A1- 1 826 589
- EP-A1- 3 133 423
- EP-A1- 3 633 413
- EP-A2- 1 923 726
- DE-U1- 202007 014 653

## Beschreibung

Die Erfindung betrifft eine Überwachungseinrichtung und ein Verfahren zur Absicherung eines Gefahrenbereichs mittels einer Überwachungseinrichtung.

Derartige Überwachungseinrichtungen werden im Bereich der Sicherheitstechnik eingesetzt, wobei generell mit dem Sicherheitssensor eine Gefahrenbereichsüberwachung einer gefahrbringenden Anlage durchgeführt wird, wobei der Begriff Anlage generell auch Maschinen, Roboter und dergleichen erfasst.

Insbesondere wird die Überwachungseinrichtung als Zugangssicherung zu einem Gefahrenbereich einer Anlage eingesetzt, wobei der Zugang zu dem Gefahrenbereich über eine Fördereinrichtung erfolgt.

Die Überwachungseinrichtung weist typischerweise als Sicherheitssensor einen Lichtvorhang auf, mit dem ein in einer Ebene liegendes Schutzfeld überwacht wird. Der Lichtvorhang generiert ein Schaltsignal, dessen Schaltzustände angeben ob ein Objekt im Schutzfeld vorhanden ist oder nicht. Wird mit dem Lichtvorhang ein Objekt im Schutzfeld detektiert wird durch das entsprechende Schaltsignal eine Sicherheitsfunktion ausgelöst. Beispielsweise wird mit dem Schaltsignal eine Steuereinheit der Anlage angesteuert, wodurch diese stillgesetzt wird, sodass keine Gefahren mehr von der Anlage ausgehen können.

Auf der Fördereinrichtung werden generell auch zulässige Objekte wie auf Paletten gelagerte Transportgüter der Anlage zugeführt, die zur Durchführung von Arbeitsvorgängen der Anlage benötigt werden. Da derartige zulässige Objekte nicht sicherheitskritisch sind, würde eine Auslösung der Sicherheitsfunktion bei der Bewegung zulässiger Objekte durch das Schutzfeld des Lichtvorhangs zu einem unnötigen Stillstand der Maschine führen.

Um dies zu vermeiden sind bei bekannten Überwachungseinrichtungen in Förderrichtung der Fördereinrichtung dem Sicherheitssensor Mutingsensoren vorgeordnet. Wird mit den Mutingsensoren ein Objekt als zulässiges Objekt erkannt, wird der Sicherheitssensor für eine vorgegebene Zeitdauer überbrückt, sodass dieser nicht mehr zur Auslösung der Sicherheitsfunktion führt, wenn das zulässige Objekt das Schutzfeld passiert.

Derartige Mutingsensoren sind typischerweise von Lichtschrankenanordnungen gebildet. Mit derartigen Lichtschrankenanordnungen können zulässige Objekte oft nicht zuverlässig erkannt werden.

Weiterhin ist bei derartigen Überwachungseinrichtungen nachteilig, dass die dem Sicherheitssensor vorgeordneten Mutingsensoren einen erheblichen Raumbedarf beanspruchen.

Zudem ist nachteilig, dass die Abstimmung des Timings und der Auswertung der Signale der Mutingsensoren aufwändig und fehleranfällig ist, da aus den Zeitpunkten der Objektdetektionen der Mutingsensoren hochgerechnet werden muss, welche Zeitspanne vergeht, bis das zulässige Objekt tatsächlich den Sicherheitssensor passiert hat.

Weiterhin ist es bekannt, ein Muting des Sicherheitssensors abhängig von einem externen Steuersignal zu generieren. Dieses Signal kann beispielsweise von der Steuerung der Fördereinrichtung, welches zulässige Objekte transportiert, generiert werden.

Das Muting des Sicherheitssensors wird bevorzugt mit dem Beginn des externen Steuersignals gestartet. Als Bedingung für das Aufrechterhalten des Mutings kann als Forderung definiert sein, dass innerhalb eines bestimmten Zeitintervalls nach Beginn des Steuersignals der Sicherheitssensor im Schutzfeld einen Objekteingriff registriert.

Die EP 3 133 423 B1 betrifft einen Lichtvorhang mit einer Mutingfunktion. Mit einer Mutingfunktion kann der Lichtvorhang in einem vollständigen oder partiellen Stummschaltungsmodus betrieben werden. Mit einem Lichtvorhang-Steuerungssystem, das eine Ausgabekomponente umfasst, erfolgt eine Steuerung eines partiellen Stummschaltungsmodus. In Reaktion auf das Bestimmen, dass ein erster Teilsatz der Lichtstrahlen unterbrochen ist und ein zweiter Teilsatz von Lichtstrahlen nicht unterbrochen ist, ist die Ausgabekomponente dazu konfiguriert, die Sicherheitsausgabe so einzustellen, dass sie einen sicheren Zustand anzeigt. In Reaktion auf das Bestimmen, dass einer aus dem zweiten Teilsatz von Lichtstrahlen während des partiellen Stummschaltungsmodus unterbrochen ist und/oder einer oder mehrere Lichtstrahlen des ersten Teilsatzes von Lichtstrahlen, weniger als eine Gesamtzahl des ersten Teilsatzes, während des partiellen Stummschaltungsmodus nicht unterbrochen sind, ist die Ausgabekomponente dazu konfiguriert, die Sicherheitsausgabe so einzustellen, dass sie einen unsicheren Zustand anzeigt.

Die EP 3 633 413 A1 die Erfindung betrifft eine Sicherheitsanordnung mit einem Lichtvorhang zur Erfassung von Objekten in einem Überwachungsbereich mit einer Anordnung von Strahlachsen, welche jeweils von einem Lichtstrahlen emittierenden Sender und wenigstens einem zugeordneten Empfänger gebildet sind. Mit den Strahlachsen ist der Überwachungsbereich überwacht oder mit einem Flächen-Scanner, bei welchem von einem Sender emittierte Lichtstrahlen den Überwachungsbereich überstreichen. Der Überwachungsbereich ist in wenigstens einen Schutzbereich und wenigstens einen Muting-Steuerbereich unterteilt, wobei abhängig von Objektdetektion im Muting-Steuerbereich Muting-Funktionen steuerbar sind. Bei einer Objektdetektion im Schutzbereich ist nur dann ein Sicherheitsausgangssignal generiert, wenn kein Muting aktiviert ist.

Die EP 1 826 589 A1 betrifft einen optischen Sensor zur Überwachung einer Schutzzone an einem Arbeitsmittel. Der optische Sensor umfasst eine Lichtempfangseinheit zur Erfassung von Objekten innerhalb der Schutzzone. In einer Auswerteeinheit wird durch Auswertung von mit der Lichtempfangseinheit registrierten Objektmerkmalen eine Unterscheidung von sicherheitskritischen Objekten und nichtsicherheitskritischen Objekten durchgeführt. Bei Erfassen eines sicherheitskritischen Objekts in der Schutzzone wird eine Objektmeldung generiert und bei Erfassen eines nichtsicherheitskritischen Objekts ist in der Schutzzone wenigstens ein Bereich dieser Schutzzone überbrückbar, so dass ein Eindringen eines Objekts in diesen überbrückten Bereich nicht zur Generierung einer Objektmeldung führt.

Die EP 1 923 726 A2 betrifft einen optischen Sensor der zur Erfassung von Objekten in einem Überwachungsbereich, mit einem Sendelichtstrahlen emittierenden Sender und einem Empfangslichtstrahlen empfangenden Empfänger dient. In einer Auswerteeinheit erfolgt eine fehlersichere Auswertung der Empfangssignale des Empfängers zur Generierung von Sicherheitsdaten bildenden Objektfeststellungssignalen. Zur Übermittlung von Daten ist eine Funkverbindung vorgesehen.

Der Erfindung liegt die Aufgabe zugrunde eine Überwachungseinrichtung der eingangs genannten Art bereitzustellen, welche eine hohe Funktionalität aufweist.

Zur Lösung dieser Aufgabe sind die Merkmale der unabhängigen Ansprüche vorgesehen. Vorteilhafte Ausführungsformen und zweckmäßige Weiterbildungen der Erfindung sind in den abhängigen Ansprüchen beschrieben.

Die Erfindung betrifft eine Überwachungseinrichtung mit einem Sicherheitssensor zur Absicherung eines Gefahrenbereichs an einer Anlage, wobei der Sicherheitssensor zur Objekterfassung innerhalb eines Schutzfelds ausgebildet ist.

Der Sicherheitssensor führt in einem Überwachungsbetrieb eine Schutzfeldüberwachung derart durch, dass dieser bei einer Obj ektdetektion in wenigstens einem Bereich des Schutzfelds eine Sicherheitsfunktion für die Anlage auslöst. Mittels Mutingsignalen ist der Sicherheitssensor in einen Mutingbetrieb überführbar, wobei in wenigstens einem Bereich des Schutzfelds eine Schutzunterbrechungserkennung durchgeführt wird. Die Schutzfeldüberwachung und Schutzfeldunterbrechungserkennung werden mit unterschiedlichen Nachweiskonfigurationen betrieben.

Der Sicherheitssensor ist zur Durchführung einer Schutzfeldüberwachungserkennung ausgebildet, in welcher geprüft wird, ob das gesamte Schutzfeld objektfrei ist. Die Schutzfeldüberwachung wird im Vergleich zu der Schutzfeldunterbrechungserkennung mit einer reduzierten Auflösung betrieben.

Die Erfindung betrifft weiterhin ein entsprechendes Verfahren.

Die erfindungsgemäße Überwachungseinrichtung wird generell für eine Gefahrenbereichsüberwachung an einer gefahrbringenden Anlage eingesetzt. Besonders vorteilhaft wird die Überwachungseinrichtung als Zugangssicherung zu einem Gefahrenbereich eingesetzt, wobei der Zugang zum Gefahrenbereich insbesondere über eine Fördereinrichtung erfolgt.

Als zentrale Sicherheitskomponente der Überwachungseinrichtung ist ein Sicherheitssensor vorgesehen, mit dem ein Schutzfeld überwacht wird, das vorteilhaft in einer Ebene verläuft.

Der Sicherheitssensor generiert ein binäres Schaltsignal, dessen Schaltzustände angeben, ob sich ein Objekt im Schutzfeld befindet oder nicht. Wird mit dem Sicherheitssensor ein Objekteingriff im Schutzfeld registriert, wird durch das Schaltsignal eine Sicherheitsfunktion ausgelöst, beispielsweise die Anlage stillgesetzt, sodass von dieser keine Gefahren mehr ausgehen können.

Um ein unnötiges Stillsetzen der Anlage zu vermeiden, wenn zulässige Objekte, wie zum Beispiel der Anlage zuzuführende Transportgüter, durch das Schutzfeld in den Gefahrenbereich der Anlage gefördert sollen, ist eine Mutingfunktion vorgesehen. In einem Mutingbetrieb bei aktivierter Mutingfunktion wird der Sicherheitssensor vollständig oder partiell überbrückt, das heißt gemutet, sodass das Transportgut das Schutzfeld passieren kann, ohne dass der Sicherheitssensor die Sicherheitsfunktion auslöst.

Bei einem vollständigen Muting ist der gesamte Sicherheitssensor überbrückt. Bei einem partiellen Muting wird nur ein Teil des Schutzfeldes überbrückt, insbesondere der Teil, in dem das zulässige Objekt erwartet beziehungsweise detektiert wird.

Erfindungsgemäß wird im Überwachungsbetrieb mit dem Sicherheitssensor eine Schutzfeldüberwachung mit einer ersten Nachweiskonfiguration durchgeführt, und im Mutingbetrieb eine Schutzfeldunterbrechungserkennung mit einer von der ersten Nachweiskonfiguration verschiedenen zweiten Nachweiskonfiguration durchgeführt.

Diese Nachkonfigurationen sind so ausgebildet, dass einerseits im Überwachungsbetrieb Objekte, insbesondere sicherheitskritische Objekte sicher erkannt werden und zur Auslösung der Sicherheitsfunktion führen. Andererseits ist die zweite Nachweiskonfiguration so ausgebildet, dass mit der Schutzfeldunterbrechungserkennung während des Mutingbetriebs ein das Schutzfeld passierendes zulässiges Objekt sicher identifiziert wird.

Eine beispielhafte Anwendung besteht darin, einen Mutingbetrieb einzuleiten und durchzuführen, dass ein Transportgut als zulässiges Objekt durch das Schutzfeld bewegt wird, ohne dass hierbei der Sicherheitssensor die Sicherheitsfunktion auslöst.

Bei einem derartigen Transportgut können Transportgutteile wie Verpackungsfolien oder abgerissene Packbänder lose herunterhängen oder vom Transportgut abstehen und dadurch zu einer Konturänderung des Transportguts führen.

In diesem Fall ist es vorteilhaft die Schutzfeldüberwachung während des Überwachungsbetriebs mit einer Nachweiskonfiguration mit geringerer Empfindlichkeit durchzuführen als die Schutzfeldunterbrechungserkennung während des Mutingbetriebs.

Die weniger empfindliche Nachweiskonfiguration im Überwachungsbetrieb reicht für die Erfassung sicherheitskritischer Objekte wie Personen aus. Mit der Nachweiskonfiguration mit empfindlicherer Nachweiskonfiguration wird demgegenüber das Transportgut bei der Schutzfeldunterbrechungserkennung während des Mutingbetriebs erkannt.

Erfindungsgemäß sind die Nachweiskonfigurationen durch unterschiedliche Auflösungen des Sicherheitssensors bei der Objekterkennung definiert. Dabei wird vorteilhaft die Schutzfeldüberwachung im Vergleich zu der Schutzfeldunterbrechungserkennung mit einer reduzierten Auflösung durchgeführt.

Gemäß einer ersten Ausführungsform ist der Sicherheitssensor ein Lichtvorhang.

In diesem Fall weist der Lichtvorhang eine Anzahl von Strahlachsen bildenden Paaren von Lichtstrahlen emittierenden Sendern und Lichtstrahlen empfangenden Empfängern auf, wobei die Auflösung des Lichtvorhangs durch eine Anzahl benachbarter Strahlachsen vorgegeben ist, die gleichzeitig unterbrochen sein müssen, damit eine Objektmeldung generiert wird.

Gemäß einer zweiten Ausführungsform ist der Sicherheitssensor ein Flächendistanzsensor.

In diesem Fall weist der Flächendistanzsensor einen Distanzsensor mit einem Sendelichtstrahlen emittierenden Sendeelement und einem Empfangslichtstrahlen empfangenden Empfangselement auf. Eine Ablenkeinheit ist vorgesehen, mittels derer die Sendelichtstrahlen periodisch einen Winkelbereich überstreichen, und wobei Teilwinkelbereiche des Winkelbereichs die Auflösung des Flächendistanzsensors definieren.

Alternativ oder zusätzlich können als Nachweiskonfigurationen unterschiedliche Teile des Schutzfeldes, die bei der Schutzfeldüberwachung oder Schutzfeldunterbrechungserkennung überwacht werden, vorgegeben sein.

Des Weiteren können als Nachweiskonfigurationen unterschiedliche Auswertezeiten für die Schutzfeldüberwachung und Schutzfeldunterbrechungserkennung vorgegeben sein.

Generell sind Nachweiskonfigurationen räumlich und/oder zeitlich veränderlich.

Dabei können Nachweiskonfigurationen abhängig von früheren Schutzfeldunterbrechungen vorgebbar sein.

Des Weiteren können Nachweiskonfigurationen über eine externe Einheit vorgebbar sein.

Durch die Mutingsignale erfolgt vorteilhaft eine zweikanalige und damit fehlersichere Einleitung des Mutingbetriebs.

Vorteilhaft wird die zweikanalige Einleitung des Mutingbetriebs dadurch realisiert, dass die Mutingsignale von einem externen Steuersignal und einer mit dem Sicherheitssensor festgestellten Schutzfeldunterbrechung gebildet sind. Ein Übergang in den Mutingbetrieb erfolgt nur dann, wenn die Schutzfeldunterbrechung innerhalb eines vorgegebenen Zeitintervalls nach dem Steuersignal registriert wird.

Dabei ist eine Muting-Ablauflogik zur Steuerung des Mutingbetriebs vorgesehen. Die Muting-Ablauflogik ist im Sicherheitssensor integriert oder bildet eine separate Einheit.

Ein Vorteil besteht hierbei darin, dass die Mutingfunktion allein in Abhängigkeit von Steuersignalen einer externen Einheit und Signalen des Sicherheitssensors selbst bereitgestellt wird. Zusätzliche externe Mutingsensoren werden daher nicht benötigt.

Wenn der Sicherheitssensor mit einer weniger empfindlichen Nachweiskonfiguration, insbesondere mit reduzierter Auflösung betrieben wird, besteht das Problem, dass ein komplettes Freiwerden des Schutzfeldes nicht sicher überprüft werden kann. Dies aber stellt eine wesentliche sicherheitskritische Anforderung an den Sicherheitssensor dar, da damit dessen Funktionsfähigkeit überprüft wird.

Ist der Sicherheitssensor beispielsweise als Lichtvorhang ausgebildet, der bei reduzierter Auflösung betrieben wird, so wird ein Objekt nur dann detektiert, wenn eine Anzahl n > 1 von Strahlachsen gleichzeitig unterbrochen ist.

Bei dieser reduzierten Auflösung im Überwachungsbetrieb kann es sein, dass eine defekte Strahlachse nicht erkannt wird. Zur Einleitung des Mutingbetriebs kann jedoch fälschlicherweise die defekte unterbrochene Strahlachse als gültiges Mutingsignal erkannt werden, wodurch fälschlicherweise der Mutingbetrieb freigegeben wird, was zu unkontrollierbaren Gefahrensituationen führen kann.

Weiterhin wird dann, wenn neben dem externen Steuersignal ein Mutingsignal durch den Sicherheitssensor selbst generiert wird, die Zweikanaligkeit der Einleitung des Mutingbetriebs aufgehoben. Dies ist nur für eine begrenzte Zeitdauer zulässig, da ansonsten die erforderliche Fehlersicherheit der Überwachungseinrichtung nicht mehr gegeben ist.

Zur Lösung dieses Problems wird erfindungsgemäß eine von der Schutzfeldüberwachung unabhängige Schutzfeldüberwachungserkennung durchgeführt, bei der geprüft wird, ob das gesamte Schutzfeld wieder frei wird.

Bei einem als Lichtvorhang ausgebildeten Sicherheitssensor wird mit der Schutzfeldüberwachungserkennung geprüft, ob alle Strahlachsen des Lichtvorhangs frei werden, wodurch deren Funktionsfähigkeit überprüft wird.

Gemäß einer vorteilhaften Ausführungsform wird mit der Schutzfeldüberwachungserkennung geprüft, ob innerhalb eines vorgegebenen Zeitraums das gesamte Schutzfeld objektfrei geworden ist.

Bei einem Sicherheitssensor in Form eines Lichtvorhangs kann die Reihenfolge, wann die Strahlachsen frei werden beliebig sein oder durch eine bestimmte Reihenfolge vorgegeben sein. Insbesondere kann gefordert werden, dass bei einem als Lichtvorhang ausgebildeten Sicherheitssensor bei der Schutzfeldüberwachungserkennung alle Strahlachsen gleichzeitig frei werden müssen.

Vorteilhaft ist der vorgegebene Zeitraum abhängig von einer Mutingphase, während derer sich der Sicherheitssensor im Mutingbetrieb befindet.

Insbesondere liegt der vorgegebene Zeitraum zwischen zwei Mutingphasen oder zwischen dem Zeitpunkt des Einschaltens des Sicherheitssensors und der ersten Mutingphase.

Alternativ umfasst der vorgegebene Zeitraum mehrere Mutingphasen.

Des Weiteren kann vorteilhaft der vorgegebene Zeitraum in einem zeitlichen Bezug zu dem ein Mutingsignal bildenden externen Steuersignal stehen.

Insbesondere in diesem Fall werden bei einem negativen Ergebnis der Schutzfeldüberwachungserkennung die Mutingsignale blockiert.

Bei einer negativen Schutzfeldüberwachungserkennung wird somit das Auslösen des Mutings verhindert, der Sicherheitssensor bleibt somit im Überwachungsbetrieb, wodurch durch ein unkontrolliertes Muting hervorgerufene Gefahrensituationen vermieden werden.

Alternativ wird bei einem negativen Ergebnis der Schutzfeldüberwachungserkennung die Anlage über den Sicherheitssensor verriegelt.

Durch die Verriegelung wird die Anlage sofort in einen sicheren Zustand überführt, so dass von dieser keine Gefahren mehr ausgehen können.

Die Erfindung wird im Folgenden anhand der Zeichnungen erläutert. Es zeigen:
- Figur 1:: Beispiel einer erfindungsgemäßen Überwachungseinrichtung als Zugangssicherung zu einem Gefahrenbereich einer Anlage.
- Figur 2:: Einzeldarstellung des Sicherheitssensors der Überwachungseinrichtung gemäß Figur 1.
- Figur 3:: Schnittdarstellung der Anordnung gemäß Figur 1 mit einem ersten Beispiel einer Schutzfeldüberwachung und Schutzfeldunterbrechungserkennung beziehungsweise Schutzfeldüberwachungserkennung.
- Figur 4:: Erste Variante der Ausführungsform der Figur 3.
- Figur 5:: Zweite Variante der Ausführungsform der Figur 3.
- Figur 6:: Zeitdiagramme für den Betrieb der Überwachungseinrichtung gemäß Figur 1.
- Figur 7:: Erstes Beispiel einer Schaltungslogik mit einer Muting-Ablauflogik für die Überwachungseinrichtung gemäß Figur 1.
- Figur 8:: Zweites Beispiel einer Schaltungslogik mit einer Muting-Ablauflogik für die Überwachungseinrichtung gemäß Figur 1.
- Figur 9:: Zweites Ausführungsbeispiel eines Sicherheitssensors für die Überwachungseinrichtung gemäß Figur 1.
- Figur 10:: Drittes Ausführungsbeispiel eines Sicherheitssensors für die Überwachungseinrichtung gemäß Figur 1.

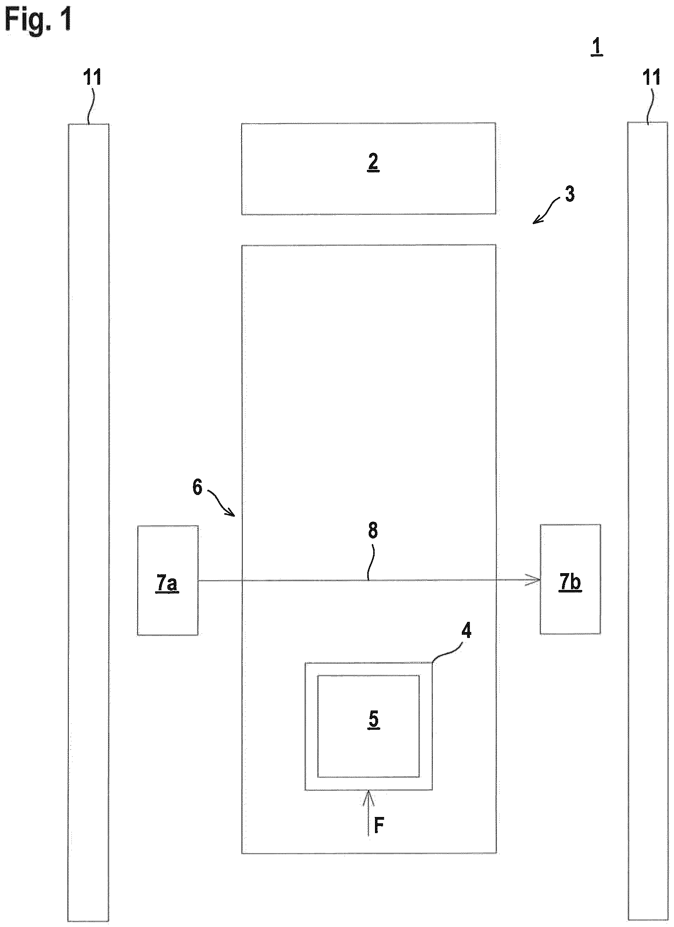

Figur 1 zeigt schematisch ein Beispiel der erfindungsgemäßen Überwachungseinrichtung 1. Die Überwachungseinrichtung 1 wird im vorliegenden Fall als Zugangssicherung für einen Gefahrenbereich an einer gefahrbringenden Anlage 2 eingesetzt. Der Zugang zum Gefahrenbereich erfolgt über eine Fördereinrichtung 3, deren Förderband in der mit F gekennzeichneten Bewegungsrichtung bewegt wird, um auf Paletten 4 angeordnete Transportgüter 5 in den Gefahrenbereich zu fördern. Natürlich können auf dieselbe Weise Transportgüter 5 aus dem Gefahrenbereich herausgeführt werden. Die Fördereinrichtung 3 ist durch seitlich angebrachte Umzäunungen 11 geschützt.

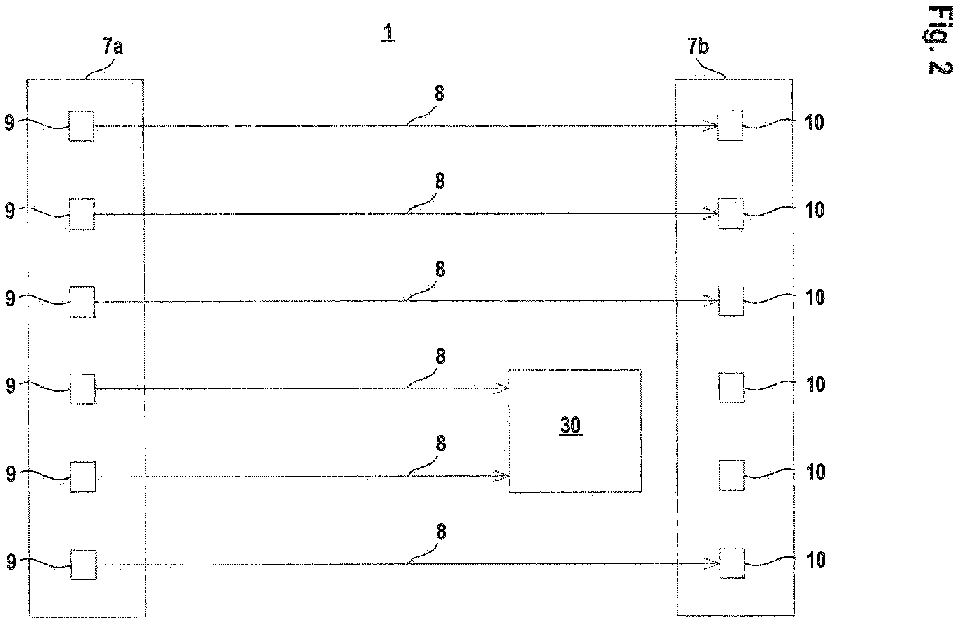

Die Überwachungseinrichtung 1 umfasst einen Sicherheitssensor 6 in Form eines optischen Sensors. Im vorliegenden Fall ist der Sicherheitssensor 6 als Lichtvorhang ausgebildet (Figur 2).

Der Lichtvorhang weist in einem ersten Gehäuse 7a eine Reihenanordnung von Lichtstrahlen 8 emittierenden Sendern 9 und in einem zweiten Gehäuse 7b eine Reihenanordnung von Empfängern 10 auf. Die Lichtstrahlen 8 definieren Strahlachsen des Lichtvorhangs und spannen ein flächiges Schutzfeld auf, das in einer vertikalen Ebene orientiert ist und damit senkrecht zur horizontalen Oberfläche des Förderbands der Fördereinrichtung 3 verläuft.

Die Sender 9 werden einzeln nacheinander zyklisch mittels einer nicht dargestellten Sendersteuerung aktiviert. Die Empfänger 10 werden in bekannter Weise optisch auf die Sender 9 synchronisiert. Jeder Sender 9 bildet mit dem zugeordneten Empfänger 10 eine Strahlachse des Lichtvorhangs aus.

Die in den Empfängern 10 generierten Empfangssignale werden in einer nicht dargestellten Auswerteeinheit zur Generierung eines binären Schaltsignals 16 ausgewertet. Die Schaltzustände des Schaltsignals 16 geben an, ob sich ein Objekt 30 im Schutzfeld befindet oder nicht. Bei freiem Schutzfeld treffen die Lichtstrahlen 8 aller Sender 9 ungehindert auf den zugeordneten Empfänger 10. Bei einem Objekteingriff im Schutzfeld werden durch das Objekt 30 die Lichtstrahlen 8 wenigstens eines Senders 9 unterbrochen. Zur Erfüllung der sicherheitstechnischen Anforderungen weist die Auswerteeinheit einen redundanten, vorzugsweise zweikanaligen Aufbau auf.

Wird in einem Überwachungsbetrieb mit dem Sicherheitssensor 6 ein Objekteingriff im Schutzfeld registriert, wird durch das Schaltsignal 16 eine Sicherheitsfunktion ausgelöst, insbesondere die gefahrbringende Anlage 2 stillgesetzt.

Um ein unnötiges Stillsetzen der Anlage 2 zu vermeiden kann der Sicherheitssensor 6 in Abhängigkeit von Mutingsignalen von Mutingsensoren überbrückt werden, wenn ein zulässiges Objekt 30 wie zum Beispiel ein auf einer Palette 4 gelagertes Transportgut 5 das Schutzfeld des Sicherheitssensors 6 passiert. Durch die Überbrückung des Sicherheitssensors 6 löst dieser keine Sicherheitsfunktion aus, wenn das zulässige Objekt 30 das Schutzfeld passiert und das Transportgut 5 kann der Anlage 2 zugeführt werden, ohne dass diese stillgesetzt wird.

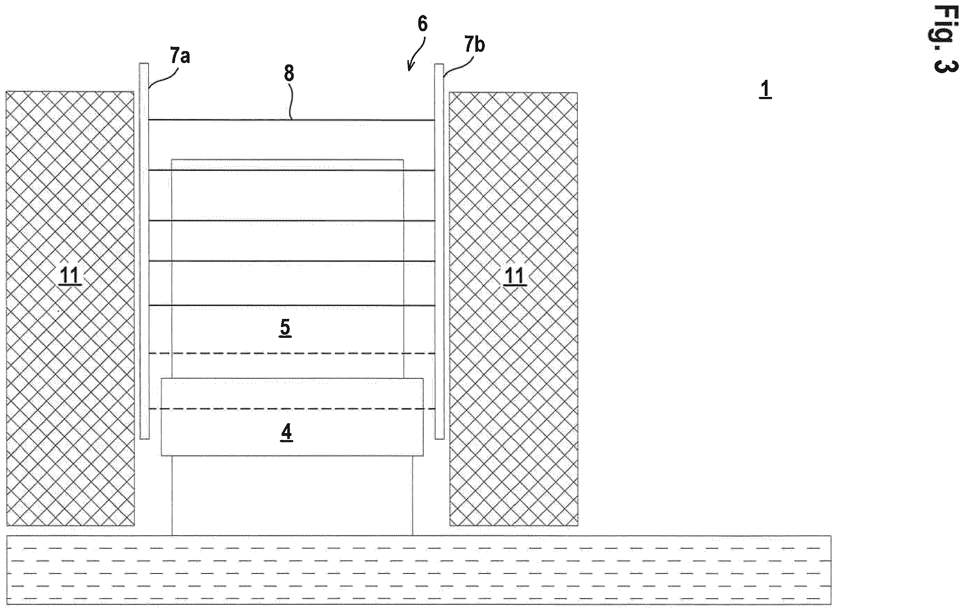

Figur 3 zeigt ein Ausführungsbeispiel des Betriebs der Überwachungseinrichtung 1 gemäß Figur 1.

Der Sicherheitssensor 6 führt in einem Bereich des Schutzfeldes, der in Figur 3 mit den mit durchgezogenen Linien dargestellten Strahlachsen gekennzeichnet ist, eine Schutzfeldüberwachung derart durch, dass dieser bei einer Objektdetektion in diesem Bereich eine Sicherheitsfunktion für die Anlage 2 auslöst, insbesondere die Anlage 2 stillsetzt.

Weiterhin ist mittels Mutingsignalen der Sicherheitssensor 6 in einen Mutingbetrieb überführbar, wobei in einem Bereich des Schutzfeldes eine Schutzfeldunterbrechungserkennung durchgeführt wird. Dieser Bereich ist im vorliegenden Fall vom gesamten Schutzfeld gebildet, also der Strahlachsen mit durchgezogenen Linien und den Strahlachsen mit gestrichelten Linien.

Erfindungsgemäß werden die Schutzfeldüberwachung und Schutzfeldunterbrechungserkennung mit unterschiedlichen Nachweiskonfigurationen betrieben. Weiterhin ist der Sicherheitssensor 6 zur Durchführung einer Schutzfeldüberwachungserkennung ausgebildet, in welcher geprüft wird, ob das gesamte Schutzfeld objektfrei ist.

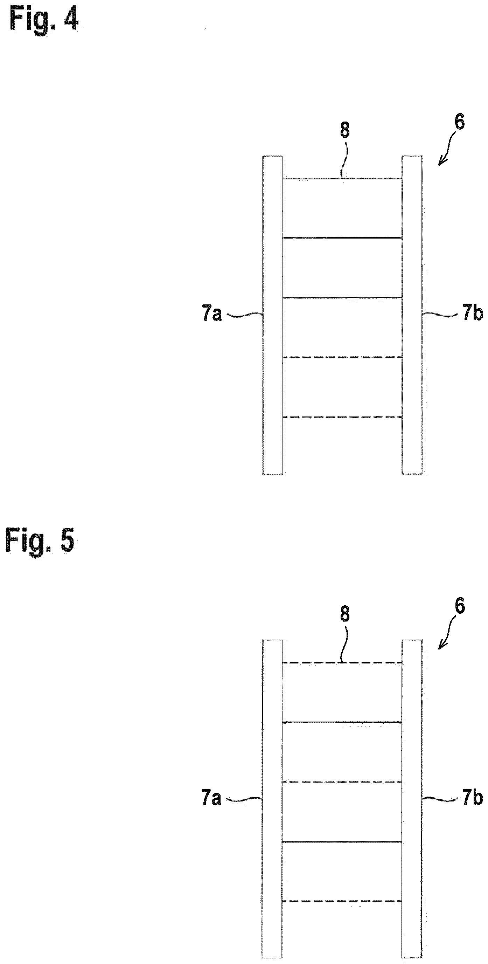

Die Figuren 4 und 5 zeigen Varianten dieser Bereichsaufteilungen.

Bei der Ausführungsform der Figuren 3 bis 5 ergeben sich die unterschiedlichen Nachweiskonfigurationen durch die unterschiedlichen Bereichsaufteilungen für die Schutzfeldüberwachung, die Schutzfeldunterbrechungserkennung beziehungsweise die Schutzfeldüberwachungserkennung.

Alternativ oder zusätzlich können die Nachweiskonfigurationen durch unterschiedliche Auflösungen des Lichtvorhangs gegeben werden.

Im Überwachungsbetrieb wird der Lichtvorhang mit reduzierter Auflösung betrieben, das heißt eine Objektmeldung wird nur generiert, wenn mehrere zusammenhängende, benachbarte Strahlachsen gleichzeitig unterbrochen sind.

Bei der Schutzfeldunterbrechungserkennung wird der Lichtvorhang dagegen mit höchstmöglicher Auflösung betrieben, das heißt jede Strahlachse einzeln meldet einen Objekteingriff.

Alternativ oder zusätzlich sind als Nachweiskonfigurationen unterschiedliche Auswertezeiten für die Schutzfeldüberwachung und Schutzfeldunterbrechungserkennung vorgegeben.

Generell können Nachweiskonfigurationen räumlich und/oder zeitlich veränderlich sein.

Dabei sind Nachweiskonfigurationen abhängig von früheren Schutzfeldunterbrechungen vorgebbar.

Schließlich können Nachweiskonfigurationen über eine externe Einheit vorgebbar sein.

Vorteilhaft sind die Mutingsignale von einem externen Steuersignal 301 und einer mit dem Sicherheitssensor 6 festgestellten Schutzfeldunterbrechung gebildet, wobei ein Übergang in den Mutingbetrieb nur dann erfolgt, wenn die Schutzfeldunterbrechung innerhalb eines vorgegebenen Zeitintervalls nach dem Steuersignal 301 registriert wird.

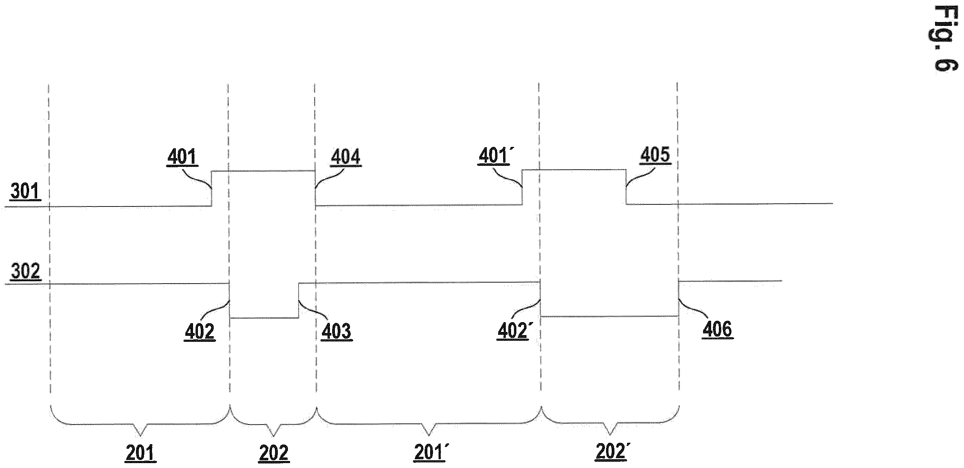

Dies ist in den Zeitdiagrammen von Figur 6 dargestellt.

Dabei ist mit 301 ein externes Steuersignal, das zur Einleitung eines Mutingbetriebs dient, bezeichnet. Mit 302 ist der zeitliche Verlauf des binären Ausgangssignals des Sicherheitssensors 6 für eine Schutzfeldüberwachung oder Schutzfeldunterbrechungserkennung dargestellt.

Mit 201, 201` sind Phasen des Überwachungsbetriebs des Sicherheitssensors 6 dargestellt. Mit 202, 202' sind Mutingphasen, das heißt Phasen in welchen sich der Sicherheitssensor 6 im Mutingbetrieb befindet, dargestellt.

Mit der steigenden Flanke 401 des externen Steuersignals 301 erfolgt eine Muting-Ankündigung. Da innerhalb eines vorgegebenen Zeitintervalls nach dieser Ankündigung mit der Flanke 402 des Ausgangssignals des Sicherheitssensors 6 das Muting bestätigt wird, wird die Mutingphase 202 eingeleitet.

Die Signalflanke 403 signalisiert, dass das Schutzfeld oder der überwachte Bereich des Schutzfeldes frei wird.

Die Signalflanke 404 des externen Steuersignals 301 beendet die Mutingphase 202.

Entsprechend leiten die Signalflanken 401' und 402' die zweite Mutingphase 202' ein, die durch die Signalflanken 405, 406 wieder beendet wird.

Mittels der erfindungsgemäßen Überwachungseinrichtung 1 wird mit der Schutzfeldüberwachungserkennung geprüft, ob innerhalb eines vorgegebenen Zeitraums das gesamte Schutzfeld objektfrei geworden ist.

Insbesondere kann dabei gefordert werden, dass bei einem als Lichtvorhang ausgebildeten Sicherheitssensor 6 bei der Schutzfeldüberwachungserkennung alle Strahlachsen gleichzeitig frei werden müssen.

Dabei kann der vorgegebene Zeitraum abhängig von einer Mutingphase 202, während derer sich der Sicherheitssensor 6 im Mutingbetrieb befindet, sein.

Insbesondere liegt der vorgegebene Zeitraum zwischen zwei Mutingphasen 202, 202' oder zwischen dem Zeitpunkt des Einschaltens des Sicherheitssensors 6 und der ersten Mutingphase 202.

Alternativ umfasst der vorgegebene Zeitraum mehrere Mutingphasen 202.

Weiterhin kann der vorgegebene Zeitraum in einem zeitlichen Bezug zu dem ein Mutingsignal bildenden externen Steuersignal 301 stehen.

Vorteilhaft wird bei einem negativen Ergebnis der Schutzfeldüberwachungserkennung die Anlage 2 über den Sicherheitssensor 6 verriegelt.

Alternativ werden bei einem negativen Ergebnis der Schutzfeldüberwachungserkennung die Mutingsignale blockiert.

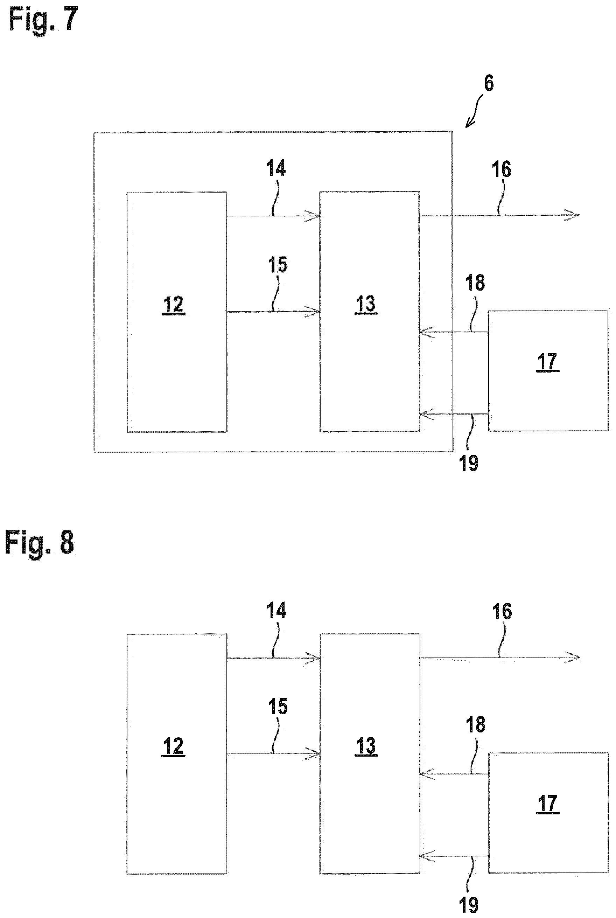

Figur 7 zeigt ein erstes Ausführungsbeispiel einer Schaltungslogik für die Überwachungseinrichtung 1 gemäß Figur 1. Die Komponenten der Schaltungslogik sind im vorliegenden Fall im Sicherheitssensor 6, das heißt im Lichtvorhang integriert.

Die Schaltungslogik weist eine Lichtvorhangfunktion 12 auf, die von der Auswerteeinheit des Lichtvorhangs gebildet ist und welche die Empfangssignale der Empfänger 10 des Lichtvorhangs auswertet. Weiterhin ist eine Muting-Ablauflogik 13 vorgesehen.

Von der Lichtvorhangfunktion 12 werden Informationssignale 14 über das Ergebnis der Schutzfeldüberwachung und Informationssignale 15 über das Ergebnis der Schutzfeldüberwachungserkennung an die Muting-Ablauflogik 13 ausgegeben.

In der Muting-Ablauflogik 13 wird insbesondere das Schaltsignal 16 des Lichtvorhangs ausgegeben, durch welches die Sicherheitsfunktion ausgelöst werden kann.

In einer externen Steuerung 17 wird ein dem externen Steuersignal 301 entsprechendes Steuersignal 18 zum Einleiten einer Mutingphase 202 in die Muting-Ablauflogik 13 eingegeben. In der Muting-Ablauflogik 13 wird damit und mit den Ergebnissen der Schutzfeldüberwachung der Mutingbetrieb gesteuert.

Mit einem weiteren von der externen Steuerung 17 in die Muting-Ablauflogik 13 eingegebenen Steuersignal 19 können Nachweiskonfigurationen für den Lichtvorhang vorgegeben werden.

Figur 8 zeigt eine Variante der Ausführungsform gemäß Figur 7. Diese Ausführungsform unterscheidet sich von der Ausführungsform gemäß Figur 7 nur dadurch, dass nun die Muting-Ablauflogik 13 eine externe Einheit außerhalb des Sicherheitssensors 6 bildet.

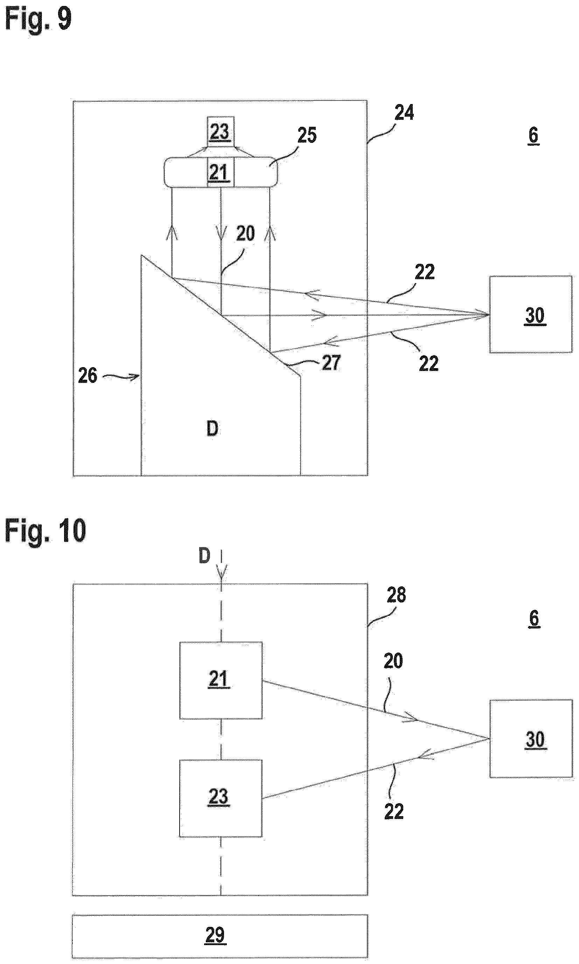

Die Figuren 9 und 10 zeigen Ausführungsbeispiele von Sicherheitssensoren 6 in Form von distanzmessenden optischen Sensoren, wobei die Distanzmessungen vorteilhaft nach einem Impuls-Laufzeitverfahren oder einem Phasenmessverfahren erfolgen. Diese Sicherheitssensoren 6 können anstelle eines Lichtvorhangs für die Überwachungseinrichtung 1 gemäß Figur 1 eingesetzt werden.

Figur 9 zeigt ein Ausführungsbeispiel eines optischen Sensors in Form eines Flächendistanzsensors, das heißt eines scannenden Distanzsensors. Zur Durchführung von Distanzmessungen weist der optische Sensor ein Sendelichtstrahlen 20 emittierendes Sendeelement 21 und ein Empfangslichtstrahlen 22 empfangendes Empfangselement 23 auf. Das Sendeelement 21 emittiert Sendelichtstrahlen 20 in Form von Lichtimpulsen. Wie Figur 9 zeigt, werden die Sendelichtstrahlen 20 an einem zu detektierenden Objekt 30 reflektiert und als Empfangslichtstrahlen 22 zum Empfangselement 23 geführt, wobei die entsprechende Lichtlaufzeit der Lichtimpulse zum Objekt 30 und zurück zum optischen Sensor für die Distanzbestimmungen ausgewertet werden.

Wie Figur 9 zeigt, sind die Sensorkomponenten des optischen Sensors in einem Gehäuse 24 integriert, wobei das Sendeelement 21 sowie das Empfangselement 23 mit einer vorgeordneten Empfangsoptik 25 stationär im Gehäuse 24 angeordnet sind. Mit dem optischen Sensor erfolgt eine Objektdetektion in einem flächigen Erfassungsbereich dadurch, dass die Sendelichtstrahlen 20 mittels einer Ablenkeinheit 26 periodisch abgelenkt werden. Die Ablenkeinheit 26 ist motorisch angetrieben und umfasst einen um eine Drehachse D drehbaren Umlenkspiegel 27, an dem die Sendelichtstrahlen 20 und Empfangslichtstrahlen 22 abgelenkt werden.

Figur 10 zeigt eine Variante des Flächendistanzsensors gemäß Figur 9. In diesem Fall erfolgt die periodische Ablenkung der Sendelichtstrahlen 20 und Empfangslichtstrahlen 22 dadurch, dass das Sendeelement 21 und das Empfangselement 23 in einem um eine Drehachse D drehbaren Messkopf 28 angeordnet sind, wobei der Messkopf 28 auf einem Sockel 29 drehbar gelagert ist.

### Bezugszeichenliste

- (1): Überwachungseinrichtung
- (2): Anlage
- (3): Fördereinrichtung
- (4): Paletten
- (5): Transportgut
- (6): Sicherheitssensor
- (7a, b): Gehäuse
- (8): Lichtstrahl
- (9): Sender
- (10): Empfänger
- (11): Umzäunung
- (12): Lichtvorhangfunktion
- (13): Muting-Ablauflogik
- (14): Informationssignal
- (15): Informationssignal
- (16): Schaltsignal
- (17): Steuerung
- (18): Steuersignal
- (19): Steuersignal
- (20): Sendelichtstrahl
- (21): Sendeelement
- (22): Empfangslichtstrahl
- (23): Empfangselement
- (24): Gehäuse
- (25): Empfangsoptik
- (26): Ablenkeinheit
- (27): Umlenkspiegel
- (28): Messkopf
- (29): Sockel
- (30): Objekt
- (201, 201'): Phase Überwachungsbetrieb
- (202, 202'): Mutingphase
- (301): Steuersignal, extern
- (302): zeitlicher Verlauf
- (401, 401'): Flanke, steigend
- (402, 402`): Flanke, Ausgangssignal
- (403): Signalflanke
- (404): Signalflanke
- (405): Signalflanke
- (406): Signalflanke
- D: Drehachse

## Patentansprüche

1. Überwachungseinrichtung (1) mit einem Sicherheitssensor (6) zur Absicherung eines Gefahrenbereichs an einer Anlage (2), wobei der Sicherheitssensor (6) zur Objekterfassung innerhalb eines Schutzfelds ausgebildet ist, wobei der Sicherheitssensor (6) in einem Überwachungsbetrieb eine Schutzfeldüberwachung derart durchführt, dass dieser bei einer Objektdetektion in wenigstens einem Bereich des Schutzfelds eine Sicherheitsfunktion für die Anlage (2) auslöst, und wobei mittels Mutingsignalen der Sicherheitssensor (6) in einen Mutingbetrieb überführbar ist, und wobei in wenigstens einem Bereich des Schutzfelds eine Schutzfeldunterbrechungserkennung durchgeführt wird, wobei der Sicherheitssensor (6) zur Durchführung einer Schutzfeldüberwachungserkennung ausgebildet ist, in welcher geprüft wird, ob das Schutzfeld objektfrei ist, wobei die Schutzfeldüberwachung und Schutzfeldunterbrechungserkennung mit unterschiedlichen Nachweiskonfigurationen betrieben werden , **dadurch gekennzeichnet, dass** die Schutzfeldüberwachung im Vergleich zu der Schutzfeldunterbrechungserkennung mit einer reduzierten Auflösung durchgeführt wird.

2. Überwachungseinrichtung (1) nach Anspruch 1, **dadurch gekennzeichnet, dass** als Nachweiskonfigurationen unterschiedliche Teile des Schutzfeldes, die bei der Schutzfeldüberwachung oder Schutzfeldunterbrechungserkennung überwacht werden, vorgegeben sind.

3. Überwachungseinrichtung (1) nach einem der Ansprüche 1 oder 2, **dadurch gekennzeichnet, dass** als Nachweiskonfigurationen unterschiedliche Auswertezeiten für die Schutzfeldüberwachung und Schutzfeldunterbrechungserkennung vorgegeben sind.

4. Überwachungseinrichtung (1) nach einem der Ansprüche 1 bis 3, **dadurch gekennzeichnet, dass** Nachweiskonfigurationen räumlich und/oder zeitlich veränderlich sind.

5. Überwachungseinrichtung (1) nach einem der Ansprüche 1 bis 4, **dadurch gekennzeichnet, dass** Nachweiskonfigurationen abhängig von früheren Schutzfeldunterbrechungen vorgebbar sind.

6. Überwachungseinrichtung (1) nach einem der Ansprüche 1 bis 5, **dadurch gekennzeichnet, dass** Nachweiskonfigurationen über eine externe Einheit vorgebbar sind.

7. Überwachungseinrichtung (1) nach einem der Ansprüche 1 bis 6, **dadurch gekennzeichnet, dass** der Sicherheitssensor (6) ein Lichtvorhang ist.

8. Überwachungseinrichtung (1) nach Anspruch 7, **dadurch gekennzeichnet, dass** der Lichtvorhang eine Anzahl von Strahlachsen bildenden Paaren von Lichtstrahlen (8) emittierenden Sendern (9) und Lichtstrahlen (8) empfangenden Empfängern (10) aufweist, wobei die Auflösung des Lichtvorhangs durch eine Anzahl benachbarter Strahlachsen vorgegeben ist, die gleichzeitig unterbrochen sein müssen, damit eine Objektmeldung generiert wird.

9. Überwachungseinrichtung (1) nach einem der Ansprüche 1 bis 6, **dadurch gekennzeichnet, dass** der Sicherheitssensor (6) ein Flächendistanzsensor ist.

10. Überwachungseinrichtung (1) nach Anspruch 9, **dadurch gekennzeichnet, dass** der Flächendistanzsensor einen Distanzsensor mit einem Sendelichtstrahlen (20) emittierenden Sendeelement (21) und einem Empfangslichtstrahlen (22) empfangenden Empfangselement (23) aufweist, wobei eine Ablenkeinheit (26) vorgesehen ist, mittels derer die Sendelichtstrahlen (20) periodisch einen Winkelbereich überstreichen, und wobei Teilwinkelbereiche des Winkelbereichs die Auflösung des Flächendistanzsensors definieren.

11. Überwachungseinrichtung (1) nach einem der Ansprüche 1 bis 10, **dadurch gekennzeichnet, dass** die Mutingsignale von einem externen Steuersignal (301) und einer mit dem Sicherheitssensor (6) festgestellten Schutzfeldunterbrechung gebildet sind, wobei ein Übergang in den Mutingbetrieb nur dann erfolgt, wenn die Schutzfeldunterbrechung innerhalb eines vorgegebenen Zeitintervalls nach dem Steuersignal (301) registriert wird.

12. Überwachungseinrichtung (1) nach einem der Ansprüche 1 bis 11, **dadurch gekennzeichnet, dass** eine Muting-Ablauflogik (13) zur Steuerung des Mutingbetriebs vorgesehen ist.

13. Überwachungseinrichtung (1) nach Anspruch 12, **dadurch gekennzeichnet, dass** eine Muting-Ablauflogik (13) im Sicherheitssensor (6) integriert ist oder eine separate Einheit bildet.

14. Überwachungseinrichtung (1) nach einem der Ansprüche 1 bis 13, **dadurch gekennzeichnet, dass** mit der Schutzfeldüberwachungserkennung geprüft wird, ob innerhalb eines vorgegebenen Zeitraums das gesamte Schutzfeld objektfrei geworden ist.

15. Überwachungseinrichtung (1) nach Anspruch 14, **dadurch gekennzeichnet, dass** der vorgegebene Zeitraum abhängig von einer Mutingphase (202), während derer sich der Sicherheitssensor (6) im Mutingbetrieb befindet, ist.

16. Überwachungseinrichtung (1) nach Anspruch 15, **dadurch gekennzeichnet, dass** der vorgegebene Zeitraum zwischen zwei Mutingphasen (202, 202') oder zwischen dem Zeitpunkt des Einschaltens des Sicherheitssensors (6) und der ersten Mutingphase (202) liegt.

17. Überwachungseinrichtung (1) nach Anspruch 15, **dadurch gekennzeichnet, dass** der vorgegebene Zeitraum mehrere Mutingphasen (202) umfasst.

18. Überwachungseinrichtung (1) nach einem der Ansprüche 14 bis 17, **dadurch gekennzeichnet, dass** der vorgegebene Zeitraum in einem zeitlichen Bezug zu dem ein Mutingsignal bildenden externen Steuersignal (301) steht.

19. Überwachungseinrichtung (1) nach einem der Ansprüche 7 und 14, **dadurch gekennzeichnet, dass** bei einem als Lichtvorhang ausgebildeten Sicherheitssensor (6) bei der Schutzfeldüberwachungserkennung alle Strahlachsen gleichzeitig frei werden müssen.

20. Überwachungseinrichtung (1) nach einem der Ansprüche 1 bis 19, **dadurch gekennzeichnet, dass** bei einem negativen Ergebnis der Schutzfeldüberwachungserkennung die Anlage (2) über den Sicherheitssensor (6) verriegelt wird.

21. Überwachungseinrichtung (1) nach einem der Ansprüche 1 bis 20, **dadurch gekennzeichnet, dass** bei einem negativen Ergebnis der Schutzfeldüberwachungserkennung die Mutingsignale blockiert werden.

22. Verfahren zur Absicherung eines Gefahrenbereichs an einer Anlage (2) mittels einer Überwachungseinrichtung (1) mit einem Sicherheitssensor (6), wobei der Sicherheitssensor (6) zur Objekterfassung innerhalb eines Schutzfelds ausgebildet ist, wobei der Sicherheitssensor (6) in einem Überwachungsbetrieb eine Schutzfeldüberwachung derart durchführt, dass dieser bei einer Objektdetektion in wenigstens einem Bereich des Schutzfelds eine Sicherheitsfunktion für die Anlage (2) auslöst, und wobei mittels Mutingsignalen der Sicherheitssensor (6) in einen Mutingbetrieb überführbar ist, wobei in wenigstens einem Bereich des Schutzfelds eine Schutzfeldunterbrechungserkennung durchgeführt wird, wobei die Schutzfeldüberwachung und Schutzfeldunterbrechungserkennung mit unterschiedlichen Nachweiskonfigurationen betrieben werden, und dass der Sicherheitssensor (6) zur Durchführung einer Schutzfeldüberwachungserkennung ausgebildet ist, in welcher geprüft wird, ob das gesamte Schutzfeld objektfrei ist, **dadurch gekennzeichnet, dass** die Schutzfeldüberwachung im Vergleich zu der Schutzfeldunterbrechungserkennung mit einer reduzierten Auflösung durchgeführt wird.

## Claims

1. A monitoring device (1) with a safety sensor (6) for safeguarding a hazardous area on an installation (2), wherein the safety sensor (6) is designed for object detection within a protective field, wherein the safety sensor (6) carries out protective field monitoring in a monitoring mode in such a way that it triggers a safety function for the installation (2) when an object is detected in at least one area of the protective field, and wherein the safety sensor (6) can be transferred to a muting mode by means of muting signals, that it triggers a safety function for the system (2) when an object is detected in at least one area of the protective field, and wherein the safety sensor (6) can be switched to a muting mode by means of muting signals, and wherein a protective field interruption detection is carried out in at least one area of the protective field,
wherein the safety sensor (6) is designed to perform a protective field monitoring detection in which it is checked whether the protective field is object-free, wherein the protective field monitoring and protective field interruption detection are operated with different detection configurations,
**characterised in that**
the protective field monitoring is performed with a reduced resolution compared to the protective field interruption detection.

2. A monitoring device (1) according to claim 1, **characterised in that** different parts of the protective field, which are monitored during protective field monitoring or protective field interruption detection, are specified as detection configurations.

3. A monitoring device (1) according to one of claims 1 or 2, **characterised in that** different evaluation times for protective field monitoring and protective field interruption detection are specified as the detection configuration.

4. A monitoring device (1) according to one of claims 1 to 3, **characterised in that** detection configurations are spatially and/or temporally variable.

5. A monitoring device (1) according to one of claims 1 to 4, **characterised in that** detection configurations can be preset depending on previous protective field interruptions.

6. A monitoring device (1) according to one of claims 1 to 5, **characterised in that** detection configurations can be preset via an external unit.

7. A monitoring device (1) according to one of claims 1 to 6, **characterised in that** the safety sensor (6) is a light curtain.

8. A monitoring device (1) according to claim 7, **characterised in that** the light curtain has a number of pairs of transmitters (9) emitting light beams (8) and receivers (10) receiving light beams (8) forming beam axes, the resolution of the light curtain being predetermined by a number of adjacent beam axes which must be interrupted simultaneously in order for an object message to be generated.

9. A monitoring device (1) according to one of claims 1 to 6, **characterised in that** the safety sensor (6) is an area distance sensor.

10. A monitoring device (1) according to claim 9, **characterised in that** the area distance sensor has a distance sensor with a transmitting element (21) emitting transmitted light beams (20) and a receiving element (23) receiving received light beams (22), wherein a deflection unit (26) is provided, by means of which the transmitted light beams (20) periodically sweep over an angular range, and wherein partial angular ranges of the angular range define the resolution of the area distance sensor.

11. A monitoring device (l) according to one of claims 1 to 10, **characterised in that** the muting signals are formed by an external control signal (301) and a protective field interruption detected by the safety sensor (6), a transition to muting mode only taking place if the protective field interruption is registered within a predetermined time interval after the control signal (301).

12. A monitoring device (1) according to one of claims 1 to 11, **characterised in that** a muting sequence logic (13) is provided for controlling the muting operation.

13. A monitoring device (1) according to claim 12, **characterised in that** a muting sequence logic (13) is integrated in the safety sensor (6) or forms a separate unit.

14. A monitoring device (1) according to one of claims 1 to 13, **characterised in that** the protective field monitoring detection is used to check whether the entire protective field has become object-free within a predetermined period of time.

15. A monitoring device (1) according to claim 14, **characterised in that** the predetermined time period is dependent on a muting phase (202) during which the safety sensor (6) is in muting mode.

16. A monitoring device (1) according to claim 15, **characterised in that** the predetermined time period lies between two muting phases (202, 202') or between the time at which the safety sensor (6) is switched on and the first muting phase (202).

17. A monitoring device (1) according to claim 15, **characterised in that** the predetermined time period comprises several muting phases (202).

18. A monitoring device (1) according to one of claims 14 to 17, **characterised in that** the predetermined time period is related in time to the external control signal (301) forming a muting signal.

19. A monitoring device (1) according to one of claims 7 and 14, **characterised in that** in the case of a safety sensor (6) designed as a light curtain, all beam axes must be cleared simultaneously during protective field monitoring detection.

20. A monitoring device (1) according to one of claims 1 to 19, **characterised in that** the system (2) is locked via the safety sensor (6) in the event of a negative result of the protective field monitoring detection.

21. A monitoring device (1) according to one of claims 1 to 20, **characterised in that** the muting signals are blocked in the event of a negative result of the protective field monitoring detection.

22. A method for safeguarding a hazardous area on an installation (2) by means of a monitoring device (1) with a safety sensor (6), wherein the safety sensor (6) is designed for object detection within a protective field, wherein the safety sensor (6) carries out protective field monitoring in a monitoring mode in such a way that it triggers a safety function for the installation (2) when an object is detected in at least one region of the protective field, and wherein the safety sensor (6) is transferred to a muting mode by means of muting signals, that it triggers a safety function for the system (2) when an object is detected in at least one area of the protective field, and wherein the safety sensor (6) can be transferred to a muting mode by means of muting signals, wherein a protective field interruption detection is carried out in at least one area of the protective field,
wherein the protective field monitoring and protective field interruption detection are operated with different detection configurations, and in that the safety sensor (6) is designed to perform a protective field monitoring detection in which it is checked whether the entire protective field is object-free, **characterised in that** the safety sensor (6) is designed to perform a protective field monitoring detection in which it is checked whether the entire protective field is object-free, the protective field monitoring is performed with a reduced resolution compared to the protective field interruption detection.

## Revendications

1. Dispositif de surveillance (1) muni d'un capteur de sécurité (6) pour la protection d'une zone dangereuse sur une installation (2), dans lequel le capteur de sécurité (6) est conçu pour la détection d'objets dans un champ de protection, dans lequel le capteur de sécurité (6) effectue la surveillance du champ de protection dans un mode de surveillance de telle sorte qu'il déclenche une fonction de sécurité pour l'installation (2) lorsqu'un objet est détecté dans au moins une zone du champ de protection, et dans lequel le capteur de sécurité (6) peut passer en mode d'inhibition au moyen de signaux d'inhibition, qu'il déclenche une fonction de sécurité pour l'installation (2) lorsqu'un objet est détecté dans au moins une zone du champ de protection, et dans lequel le capteur de sécurité (6) peut passer en mode d'inhibition au moyen de signaux d'inhibition, et dans lequel une détection d'interruption du champ de protection est effectuée dans au moins une zone du champ de protection,
dans lequel le capteur de sécurité (6) est conçu pour effectuer une détection de surveillance du champ de protection au cours de laquelle on vérifie que le champ de protection est libre de tout objet, la surveillance du champ de protection et la détection de l'interruption du champ de protection étant effectuées avec des configurations de détection différentes,
**caractérisé par le fait que** la surveillance du champ de protection est effectuée avec une résolution réduite par rapport à la détection de l'interruption du champ de protection.

2. Dispositif de surveillance (1) selon la revendication 1, **caractérisé par le fait que** différentes parties du champ de protection, qui sont surveillées pendant la surveillance du champ de protection ou la détection d'interruption du champ de protection, sont spécifiées en tant que configurations de détection.

3. Dispositif de surveillance (1) selon l'une des revendications 1 ou 2, **caractérisé par le fait que** différents temps d'évaluation pour la surveillance du champ de protection et la détection de l'interruption du champ de protection sont spécifiés en tant que configuration de détection.

4. Dispositif de surveillance (1) selon l'une des revendications 1 à 3, **caractérisé par le fait que** les configurations de détection sont variables dans l'espace et/ou dans le temps.

5. Dispositif de surveillance (1) selon l'une des revendications 1 à 4, **caractérisé par le fait que** les configurations de détection peuvent être prédéfinies en fonction des interruptions précédentes du champ de protection.

6. Dispositif de surveillance (1) selon l'une des revendications 1 à 5, **caractérisé par le fait que** les configurations de détection peuvent être prédéfinies par une unité externe.

7. Dispositif de surveillance (1) selon l'une des revendications 1 à 6, **caractérisé par le fait que** le capteur de sécurité (6) est un rideau lumineux.

8. Dispositif de surveillance (1) selon la revendication 7, **caractérisé par le fait que** le rideau lumineux comporte un certain nombre de paires d'émetteurs (9) émettant des faisceaux lumineux (8) et de récepteurs (10) recevant des faisceaux lumineux (8) formant des axes de faisceau, la résolution du rideau lumineux étant prédéterminée par un nombre d'axes de faisceau adjacents qui doivent être interrompus simultanément pour qu'un message d'objet puisse être généré.

9. Dispositif de surveillance (1) selon l'une des revendications 1 à 6, **caractérisé par le fait que** le capteur de sécurité (6) est un capteur de distance de zone.

10. Dispositif de surveillance (1) selon la revendication 9, **caractérisé par le fait que** le capteur de distance de zone a un capteur de distance avec un élément de transmission (21) émettant des faisceaux lumineux transmis (20) et un élément de réception (23) recevant des faisceaux lumineux reçus (22), dans lequel une unité de déviation (26) est fournie, au moyen de laquelle les faisceaux lumineux transmis (20) balayent périodiquement une plage angulaire, et dans lequel des plages angulaires partielles de la plage angulaire définissent la résolution du capteur de distance de zone.

11. Dispositif de surveillance (l) selon l'une des revendications 1 à 10, **caractérisé en ce que** les signaux d'inhibition sont formés par un signal de commande externe (301) et une interruption du champ de protection détectée par le capteur de sécurité (6), une transition vers le mode d'inhibition n'ayant lieu que si l'interruption du champ de protection est enregistrée dans un intervalle de temps prédéterminé après le signal de commande (301).

12. Dispositif de surveillance (1) selon l'une des revendications 1 à 11, **caractérisé par le fait qu'**une logique de séquence d'inhibition (13) est prévue pour commander l'opération d'inhibition.

13. Dispositif de surveillance (1) selon la revendication 12, **caractérisé par le fait qu'**une logique de séquence d'inhibition (13) est intégrée dans le capteur de sécurité (6) ou forme une unité séparée.

14. Dispositif de surveillance (1) selon l'une des revendications 1 à 13, **caractérisé par le fait que** la détection de la surveillance du champ de protection est utilisée pour vérifier que l'ensemble du champ de protection est devenu exempt d'objets au cours d'une période de temps prédéterminée.

15. Dispositif de surveillance (1) selon la revendication 14, **caractérisé en ce que** la période de temps prédéterminée dépend d'une phase d'inhibition (202) pendant laquelle le capteur de sécurité (6) est en mode d'inhibition.

16. Dispositif de surveillance (1) selon la revendication 15, **caractérisé par le fait que** la période de temps prédéterminée se situe entre deux phases d'inhibition (202, 202') ou entre le moment où le capteur de sécurité (6) est activé et la première phase d'inhibition (202).

17. Dispositif de surveillance (1) selon la revendication 15, **caractérisé par le fait que** la période de temps prédéterminée comprend plusieurs phases d'inhibition (202).

18. Dispositif de surveillance (1) selon l'une des revendications 14 à 17, **caractérisé par le fait que** la période de temps prédéterminée est liée dans le temps au signal de commande externe (301) formant un signal d'inhibition.

19. Dispositif de surveillance (1) selon l'une des revendications 7 et 14, **caractérisé par le fait que** dans le cas d'un capteur de sécurité (6) conçu comme un rideau lumineux, tous les axes du faisceau doivent être dégagés simultanément lors de la détection de la surveillance du champ de protection.

20. Dispositif de surveillance (1) selon l'une des revendications 1 à 19, **caractérisé par le fait que** le système (2) est verrouillé par le capteur de sécurité (6) en cas de résultat négatif de la détection de la surveillance du champ de protection.

21. Dispositif de surveillance (1) selon l'une des revendications 1 à 20, **caractérisé par le fait que** les signaux d'inhibition sont bloqués en cas de résultat négatif de la détection de la surveillance du champ de protection.

22. Procédé de sécurisation d'une zone dangereuse sur une installation (2) au moyen d'un dispositif de surveillance (1) avec un capteur de sécurité (6), dans lequel le capteur de sécurité (6) est conçu pour la détection d'objets dans un champ de protection, dans lequel le capteur de sécurité (6) effectue une surveillance du champ de protection dans un mode de surveillance de telle sorte qu'il déclenche une fonction de sécurité pour l'installation (2) lorsqu'un objet est détecté dans au moins une région du champ de protection, et dans lequel le capteur de sécurité (6) passe en mode d'inhibition au moyen de signaux d'inhibition, de sorte qu'il déclenche une fonction de sécurité pour l'installation (2) lorsqu'un objet est détecté dans au moins une zone du champ de protection, et dans lequel le capteur de sécurité (6) peut passer en mode d'inhibition au moyen de signaux d'inhibition, une détection d'interruption du champ de protection étant effectuée dans au moins une zone du champ de protection,
dans lequel la surveillance du champ de protection et la détection de l'interruption du champ de protection fonctionnent avec des configurations de détection différentes, et dans lequel le capteur de sécurité (6) est conçu pour effectuer une détection de surveillance du champ de protection au cours de laquelle on vérifie que l'ensemble du champ de protection est exempt d'objets, **caractérisé par le fait que** le capteur de sécurité (6) est conçu pour effectuer une détection de surveillance du champ de protection au cours de laquelle on vérifie que l'ensemble du champ de protection est exempt d'objets, la surveillance du champ de protection est effectuée avec une résolution réduite par rapport à la détection de l'interruption du champ de protection.
